# EUROPEAN PATENT SPECIFICATION

(11) **EP 4 067 078 B1**
(45) Date of publication and mention of the grant of the patent: **31.12.2025**
(21) Application number: 20894464.5
(22) Date of filing: 25.11.2020
(51) Int. Cl.: B32B 27/00, B32B 27/10

(54) **BARRIER LAMINATE**
SPERRSCHICHTLAMINAT
STRATIFIÉ BARRIÈRE

(30) Priority: 26.11.2019 JP 2019213164
(43) Date of publication of application: 05.10.2022
(73) Proprietor: Oji Holdings Corporation, Chuo-ku Tokyo 104-0061 (JP)
(72) Inventor: SHAMOTO, Yuta, Tokyo 104-0061 (JP); ISOZAKI, Tomofumi, Tokyo 104-0061 (JP); TSURUHARA, Masahiro, Tokyo 104-0061 (JP); NOISHIKI, Yasutomo, Tokyo 104-0061 (JP); TANAKA, Miyoko, Tokyo 104-0061 (JP)
(74) Representative: Godemeyer Blum Lenze Patentanwälte Partnerschaft mbB - werkpatent
(86) International application number: PCT/JP2020/043717
(87) International publication number: WO 2021/106891

(56) References cited:
- WO-A1-2013/164646
- JP-A- 2012 512 058
- JP-A- 2014 173 201
- JP-A- 2018 089 980
- JP-A- 2019 173 259
- JP-A- 2019 177 577
- JP-A- 2019 196 566

## Description

### TECHNICAL FIELD

The present invention relates to a barrier laminate comprising a paper substrate and, on at least one surface of the paper substrate, a gas barrier layer and a water vapor barrier layer in that order.

### BACKGROUND ART

Heretofore known is a barrier laminate composed of a water vapor barrier layer and a gas barrier layer formed in that order on a paper substrate for imparting water vapor barrier properties and gas barrier properties to the paper substrate.

PTL 1 describes a paper-made barrier material having a water vapor barrier layer and a gas barrier layer formed in that order on a paper substrate, wherein the water vapor barrier layer contains a water vapor barrier resin and a water repellent and the gas barrier layer contains a water-soluble polymer and a surfactant.

PTL 2 describes a paper-made barrier material further having a protective layer, on at least one surface of a paper-made barrier base material that has a water vapor barrier layer and a water-soluble polymer-containing gas barrier layer on a specific paper substrate.

### CITATION LIST

### PATENT LITERATURE

PTL 1: WO 2017/170462 A1
PTL 2: JP 2018-58360 A

### SUMMARY OF INVENTION

### TECHNICAL PROBLEM

The paper-made barrier material described in PTL 1 is inferior in waterproofness since the gas barrier layer therein contains a water-soluble polymer such as a polyvinyl alcohol as a main ingredient. Consequently, the paper-made barrier material described in PTL 1 is provided with a laminate layer in addition to the water vapor barrier layer and the gas barrier layer for securing waterproofness, and therefore has a problem in that the number of the layers is large and the number of the production steps is large.

For solving the above problem, in PTL 2, development of a paper-made barrier material that has a gas barrier layer and a water vapor barrier layer in that order on a paper substrate is investigated. However, PTL 2 says that the gas-barrier resin for use in the gas barrier layer is generally a water-soluble polymer, and in the case where a gas barrier layer and a water vapor barrier layer are formed in that order on a paper substrate, the water-soluble polymer-containing gas barrier layer may be readily degraded by the moisture in the paper substrate and the moisture in air that may penetrate thereinto via the paper substrate, that is, the problem is not solved.

Furthermore, document WO2013/164646A1 discloses a coated fibre based material comprising a fibre based substrate comprising microfibrillated cellulose and having at least first and second barrier coatings formed thereon, to articles such as paper products, particularly food grade packaging, formed from said coated material, and to methods of preparing said coated material and paper products.

The present invention has been made in consideration of the presence of the above problem, and its object is to provide a barrier laminate excellent in water vapor barrier properties and gas barrier properties, having waterproofness, and excellent in economic potential, even though the number of the layers therein is small.

### SOLUTION TO PROBLEM

The present inventors have found that, when a barrier laminate has a paper substrate and, on at least one surface of the paper substrate, a gas barrier layer and a water vapor barrier layer in that order, and when the gas barrier layer contains a specific resin binder and the water vapor layer contains a layered inorganic compound having a specific aspect ratio and a specific thickness, a cationic resin and a water-dispersible resin binder, then the barrier laminate is excellent in water vapor barrier properties and gas barrier properties, has waterproofness, and is excellent in economic potential, even though the number of the layers therein is small.
The object of the present invention is to provide a barrier laminate according to the claims.

### DESCRIPTION OF EMBODIMENTS

### [Barrier Laminate]

The barrier laminate of the present invention (hereinafter this may be simply referred to as "the barrier laminate") is a barrier laminate having a paper substrate and, on at least one surface of the paper substrate, a gas barrier layer and a water vapor barrier layer in that order, wherein the gas barrier layer contains at least one selected from the group consisting of a water-soluble resin binder and a water-dispersible resin binder 1. The water-soluble resin binder comprises at least one selected from the group consisting of a polyvinyl alcohol and a modified polyvinyl alcohol. When the gas barrier layer comprises the water-soluble resin binder, the content of the water-soluble resin binder in the gas barrier layer is 50% by mass or more in the solid content of the gas barrier layer. The water-dispersible resin binder 1 in the gas barrier layer comprises at least one selected from the group consisting of a urethane resin and a vinylidene chloride resin. When the gas barrier layer comprises the water-dispersible resin binder 1, the content of the water-dispersible resin binder 1 in the gas barrier layer is 50% by mass or more in the solid content of the gas barrier layer. The water vapor barrier layer comprises a layered inorganic compound, a cationic resin and a water-dispersible resin binder 2. The layered inorganic compound comprised in the water vapor barrier layer comprises at least one selected from the group consisting of mica and bentonite. The cationic resin comprises at least one selected from the group consisting of a polyamine resin, a cation-modified polyamide resin a polyamide-epichlorohydrin resin, a polyethyleneimine resin, a polyalkylene polyamine resin, a polyamide compound, a polyamideamine-epihalohydrin or formaldehyde condensation product, a polyamine-epihalohydrin or formaldehyde condensation product, a polyamide polyurea-epihalohydrin or formaldehyde condensation product, a polyamine polyurea-epihalohydrin or formaldehyde condensation product, a polyamideamine polyurea-epihalohydrin or formaldehyde condensation product, a polyamide polyurea compound, a polyamine polyurea compound, a polyamideamine polyurea compound, a polyamideamine compound, a polyvinylpyridine, an amino-modified acrylamide compound, a polyvinylamine resin, and a polydiallyldimethylammonium chloride. The content of the cationic resin in the water vapor barrier layer is 1 part by mass or more and 300 parts by mass or less relative to 100 parts by mass of the layered inorganic compound. The water-dispersible resin binder 2 in the water vapor barrier layer comprises at least one selected from the group consisting of a styrene/butadiene copolymer, a styrene/unsaturated carboxylic acid copolymer and an olefin/unsaturated carboxylic acid copolymer. The content of the water-dispersible resin binder 2 is 50% by mass or more in all the solid content in the water vapor barrier layer.

The water-dispersible resin binder 1 and the water-dispersible resin binder 2 are not the same, the layered inorganic compound has an aspect ratio of 50 or more, the layered inorganic compound has a thickness of 50 nm or less, the content of the layered inorganic compound in the water vapor barrier layer is 0.1 parts by mass or more and 100 parts by mass or less relative to 100 parts by mass of the water-dispersible resin binder 2. The coating amount of the gas barrier layer is, as a solid content thereof, 0.1 g/m² or more, and the coating amount of the water vapor barrier layer is 1 g/m² or more as a solid content therein. Though the number of the layers therein is small, the barrier laminate of the present embodiment is excellent in water vapor barrier properties and gas barrier properties, has waterproofness and is excellent in economic potential.

The barrier laminate of the present embodiment has a gas barrier layer on at least one surface of a paper substrate, and has, on the gas barrier layer, a water vapor barrier layer containing a layered inorganic compound having a specific aspect ratio and a specific thickness, a cationic resin and a water-dispersible binder 2, and accordingly, it has been clarified that a barrier laminate excellent in water vapor barrier properties and gas barrier properties (oxygen barrier properties), having waterproofness and excellent in economic potential can be provided even though the number of the layers therein is small.

It is presumed that, by forming a gas barrier layer and a water vapor barrier layer in that order on a paper substrate, fine pores and cracks existing in the surface of the gas barrier layer can be filled up by the water vapor barrier layer, and the gas barrier properties can be thereby improved. In addition, it is presumed that, by forming the gas barrier layer and the water vapor barrier layer in that order, the gas barrier layer can be an undercoat below the water vapor barrier layer to make the water vapor barrier layer a uniform layer.

Here, it is known that, in a layered inorganic compound, the flat part of a tabular form can be readily charged anionic and the edge part thereof can be readily charged cationic, and therefore layered inorganic compounds can mutually sterically aggregate to have a so-called card house structure. Owing to the card house structure, the viscosity of an aqueous dispersion of a layered inorganic compound is extremely high. On the other hand, the card house structure can break down easily when given force by stirring, and therefore an aqueous dispersion of a layered inorganic compound has thixotropic properties. It is considered that, when an appropriate cationic resin is added to an aqueous dispersion of a layered inorganic compound, the cationic resin can be adsorbed on the anionic flat part of the layered inorganic compound and the card house structure can be thereby broken down. As a result, it is presumed that the layered inorganic compound can be inhibited from being sterically aggregated, and the tabular layered inorganic compounds can be readily laminated in parallel to the flat surface of a paper substrate, then the coating performance of the water vapor barrier layer can be improved and the water vapor barrier properties and the waterproofness of the laminate can be thereby improved.

In addition, it is presumed that the layered inorganic compound having an aspect ratio of 50 or more in the water vapor barrier layer can exhibit a labyrinth effect to prolong the moving distance of water vapor and the like and the water vapor barrier properties can be thereby improved.

The barrier laminate of the present embodiment has a gas barrier layer and a water vapor barrier layer in that order on at least one surface of a paper substrate, and can also have a gas barrier layer and a water vapor barrier layer in that order on the other surface of the paper substrate. In addition, the barrier laminate of the present embodiment may have plural layers of gas barrier layers and water vapor barrier layers in that order.

In the case where the barrier laminate of the present embodiment is used, for example, for a wrapping material for foods or others, it is preferable that the barrier laminate has the gas barrier layer and the water vapor barrier layer in that order on one surface alone of the paper substrate. Having the configuration, in the case where the barrier laminate of the present embodiment is heat-sealed, bag-like packages can be produced readily.

### <Paper Substrate>

The paper substrate for use in the barrier laminate of the present embodiment is preferably generally-used paper that consists of a vegetable-derived pulp as a main ingredient, and more preferably paper consisting of a wood pulp as a main ingredient. Also preferred is paper that consists of pulp readily dispersible in water by a mechanical disintegrating action, as a main ingredient.

Specifically, it includes bleached or unbleached kraft paper, high-quality paper, paper board, liner paper, coated paper, semi-glazed paper, glassine paper, and Graphan paper. Among these, preferred are bleached or unbleached kraft paper, high-quality paper, and semi-glazed paper.

Using a paper substrate, the barrier laminate of the present embodiment is excellent in environmental load reduction, recyclability and easy disposal.

### (Canadian Standard Freeness (CSF))

This is measured according to JIS P 8121-2:2012. The Canadian standard freeness (CSF) of pulp that constitutes the paper substrate is, from the viewpoint of improving gas barrier properties and water vapor barrier properties, preferably 800 mL or less, more preferably 600 mL or less, and the lower limit thereof is, though not specifically limited, preferably 150 mL or more.

CSF of pulp that constitutes the paper substrate is measured according to JIS P 8121-2:2012 where a paper substrate pulp disintegrated according to JIS P 8220-1:2012 is used as a sample.

### (Stoeckigt Sizing Degree)

A Stoeckigt sizing degree (hereinafter this may be simply referred to as "sizing degree") of the paper substrate measured according to JIS P 8122:2004 is, though not specifically limited but from the viewpoint of improving gas barrier properties and water vapor barrier properties, preferably 1 second or more, and the upper limit thereof is, though not specifically limited, preferably 100 seconds or less. The sizing degree of the paper substrate can be controlled by the kind and the content of the internal sizing agent of rosin-type, alkylketene dimer-type, alkenylsuccinic anhydride-type, styrene-acrylic-type, higher fatty acid-type, petroleum resin-type and the like ones, and also by the kind of pulp and the planarizing treatment. The content of the internal sizing agent is preferably within a range of 3 parts by mass or less relative to 100 parts by mass of pulp of the paper substrate.

In addition to the internal sizing agent, any other known internal chemical agents may be added to the paper substrate. Examples of the internal chemical agents include a loading material such as titanium dioxide, kaolin, talc, and calcium carbonate, as well as a dry paper strengthening agent, a wet paper strengthening agent, an yield improver, a pH regulator, a freeness improver, a waterproofing additive, a softener, an antistatic agent, a defoaming agent, a slime controlling agent, and dye and pigment.

In making the paper substrate, any known wet papermaking machine, for example, a papermaking machine such as a Fourdrinier paper machine, a gap former-type paper machine, a cylinder paper machine, a tanmo paper machine, can be appropriately selected and used. Preferably, the paper layer formed by a papermaking machine is conveyed, for example, on a felt and dried with a drier. Before drying with a drier, a multistage cylinder drier can be used as a predrier.

Optionally, the paper substrate prepared in the manner as above can be calendered for surface treatment to uniformize the thickness and the profile thereof. As the calender treatment, any known calendering machine can be appropriately selected and used.

### (Basis Weight)

Though not specifically limited, the basis weight of the paper substrate is preferably 20 g/m² or more, more preferably 30 g/m² or more, even more preferably 40 g/m² or more, and is preferably 500 g/m² or less, more preferably 400 g/m² or less, even more preferably 300 g/m² or less, further more preferably 200 g/m² or less, further more preferably 100 g/m² or less.

The basis weight of the paper substrate is measured according to JIS P 8124:2011.

### (Thickness)

The thickness of the paper substrate is preferably 5 µm or more, more preferably 10 µm or more, even more preferably 20 µm or more, and is preferably 150 µm or less, more preferably 100 µm or less, even more preferably 75 µm or less.

The thickness of the paper substrate is measured according to JIS P 8118:2014.

### (Density)

The density of the paper substrate is, from the viewpoint of forming processability, preferably 0.5 g/cm³ or more, more preferably 0.6 g/cm³ or more, and is preferably 1.2 g/cm³ or less, more preferably 1.0 g/cm³ or less.

The density of the paper substrate is calculated from the basis weight and the thickness of the paper substrate measured according to the above-mentioned measurement methods.

### <Gas Barrier Layer>

The gas barrier layer is a layer having gas barrier properties especially to prevent oxygen gas penetration, and contains at least one selected from the group consisting of a water-soluble resin binder and a water-dispersible resin binder 1. From the viewpoint of gas barrier properties in a high humidity environment, the gas barrier layer preferably contains a water-dispersible resin binder 1.

### (Water-soluble Resin Binder)

The water-soluble resin binder is a resin binder soluble in water. The resin binder soluble in water is such that at least 1 g of the backbone polymer thereof dissolves in 100 g of water at 25°C. The backbone polymer of the water-soluble resin binder includes a polyvinyl alcohol, a modified polyvinyl alcohol, a starch and a derivative thereof, a cellulose derivative, a polyvinyl pyrrolidone, a polyacrylic acid and a salt thereof, a casein and a polyethyleneimine. Among these, from the viewpoint of improving gas barrier properties, the water-soluble resin binder is at least one selected from the group consisting of a polyvinyl alcohol and a modified polyvinyl alcohol, preferably a modified polyvinyl alcohol.

The modified polyvinyl alcohol includes an ethylene-modified polyvinyl alcohol, a carboxy-modified polyvinyl alcohol, a silicon-modified polyvinyl alcohol, an acetoacetyl-modified polyvinyl alcohol, and a diacetone-modified polyvinyl alcohol. Among these, the modified polyvinyl alcohol is preferably at least one selected from the group consisting of an ethylene-modified polyvinyl alcohol, a carboxy-modified polyvinyl alcohol, a silicon-modified polyvinyl alcohol, and an acetoacetyl-modified polyvinyl alcohol, more preferably at least one selected from the group consisting of an ethylene-modified polyvinyl alcohol, and a carboxy-modified polyvinyl alcohol, even more preferably an ethylene-modified polyvinyl alcohol.

A polyvinyl alcohol and a modified polyvinyl alcohol include completely saponified ones and partially saponified ones, and completely saponified ones are preferred. Complete saponification means a saponification degree of more than 96%. The saponification degree is a value measured according to the method of JIS K 6726:1994.

Commercial products can be used as the water-soluble resin binder, and examples of the modified polyvinyl alcohol include "Exceval (tradename)" by Kuraray Co., Ltd.

The content of the water-soluble resin binder in the gas barrier layer is, from the viewpoint of improving gas barrier properties, 50% by mass or more, more preferably 60% by mass or more, and the upper limit thereof is 100% by mass, in the solid content of the gas barrier layer.

### (Water-dispersible Resin Binder 1)

A water-dispersible resin binder is a resin binder which is not soluble in water but can be in a state finely dispersed in water like a dispersion, an emulsion or a suspension. The water-dispersible resin binder 1 comprises at least one selected from the group consisting of a urethane resin and a vinylidene chloride resin, more preferably at least one selected from the group consisting of a vinylidene chloride resin dispersion or emulsion and a urethane resin dispersion or emulsion, even more preferably a urethane resin dispersion or emulsion, further more preferably a urethane resin dispersion. Containing a urethane resin or a vinylidene chloride resin, the gas barrier layer can have enhanced gas barrier properties in a high humidity environment. Preferably, the urethane resin or the vinylidene chloride resin has, as a 25 µm-thick sheet thereof, an oxygen transmission rate at 23°C and 50% RH of 100 mL/(m² ·day ·atm) or less, more preferably 50 mL/(m² ·day ·atm) or less. The oxygen transmission rate is measured using an oxygen transmission measuring device (OX-TRAN2/20, by MOCON, Inc.).

Preferably, the urethane resin contains at least one of a metaxylylene diisocyanate-derived structural unit and a hydrogenated metaxylylene diisocyanate-derived structural unit, and more preferably, the total content of the metaxylylene diisocyanate-derived structural unit and the hydrogenated metaxylylene diisocyanate-derived structural unit therein is 50 mol% or more relative to the total amount of all the polyisocyanate-derived structural units. The urethane resin of the type expresses a high cohesive force owing to the mutual stacking effect of the hydrogen bond and the xylylene group, and therefore exhibits excellent gas barrier properties.

Commercial products can be used as the water-dispersible resin binder 1. Examples of the polyurethane resin include "Takelac W series (tradename)", "Takelac WPB series (tradename)" and "Takelac WS series (tradename)" by Mitsui Chemicals, Inc., and examples of the vinylidene chloride resin include "Diofan (tradename)" by Solvay Specialty Polymers Japan, Inc. Specifically, there are exemplified "Takelac WPB-341 (tradename)" by Mitsui Chemicals, Inc., and "Diofan B-204 (tradename)" by Solvay Specialty Polymers Japan, Inc.

The content of the water-dispersible resin binder 1 in the gas barrier layer is, from the viewpoint of improving gas barrier properties, 50% by mass or more, preferably 60% by mass or more, and the upper limit thereof is 100% by mass, in the solid content of the gas barrier layer.

### (Layered Inorganic Compound)

Preferably, from the viewpoint of improving water vapor barrier properties and gas barrier properties, the gas barrier layer further contains a layered inorganic compound. When the gas barrier layer contains a layered inorganic compound, the content of the layered inorganic compound is, though not specifically limited, preferably 1 part by mass or more, more preferably 5 parts by mass or more, and is preferably 70 parts by mass or less, more preferably 65 parts by mass or less, relative to 100 parts by mass of the water-soluble resin binder or the water-dispersible resin binder 1 in the gas barrier layer.

The layered inorganic compound includes mica, kaolin, pyrophyllite, talc, bentonite, montmorillonite, vermiculite, chlorite, septechlorite, serpentine, and stilpnomelane. Among these, preferred is at least one selected from the group consisting of mica, bentonite, kaolin and talc, and more preferred is at least one selected from the group consisting of mica and kaolin. Mica includes synthetic mica, muscovite, sericite, phlogopite, biotite, fluorophlogopite (artificial mica), lepidolite, soda mica, vanadium mica, illite, tin mica, paragonite, and brittle mica, and synthetic mica is preferred. The layered inorganic compound that the gas barrier layer contains can be the same kind as or a different kind from the layered inorganic compound that the water vapor barrier layer contains.

The gas barrier layer can optionally contain, as needed, in addition to the water-soluble resin binder, the water-dispersible resin binder 1 and the layered inorganic compound, a pigment, a dispersant, a surfactant, an antifoaming agent, a wetting agent, a dye, a color conditioner, and a thickener. The gas barrier layer can contain a cationic resin, like the water vapor barrier layer to be mentioned hereinunder, and those exemplified as the cationic resin to be in the water vapor barrier layer are preferred.

In the case where the gas barrier layer contains a layered inorganic compound and a cationic resin, the content of the cationic resin is preferably 1 part by mass or more, more preferably 5 parts by mass or more, even more preferably 10 parts by mass or more, further preferably 20 parts by mass or more, and is preferably 100 parts by mass or less, more preferably 60 parts by mass or less, even more preferably 40 parts by mass or less, further more preferably 30 parts by mass or less, relative to 100 parts by mass of the layered inorganic compound.

The thickness of the gas barrier layer is, from the viewpoint of improving gas barrier properties and reducing the layer thickness, preferably 0.1 µm or more, more preferably 0.5 µm or more, and is preferably 10 µm or less, more preferably 5 µm or less. The coating amount of the gas barrier layer is, as a solid content thereof, 0.1 g/m² or more, preferably 0.5 g/m² or more, more preferably 1 g/m² or more, and is preferably 10 g/m² or less, more preferably 8 g/m² or less, even more preferably 5 g/m² or less.

### <Water Vapor Barrier Layer>

The water vapor barrier layer is a layer having water vapor barrier properties to prevent water vapor penetration, and contains a layered inorganic compound, a cationic resin, and a water-dispersible resin binder 2.

### (Water-dispersible resin binder 2)

The backbone polymer of the water-dispersible resin binder 2 includes a polyolefin resin (e.g., polyethylene, polypropylene), a vinyl chloride resin, a styrene resin, a styrene/butadiene copolymer, an acrylonitrile/styrene copolymer, an acrylonitrile/butadiene copolymer, an ABS resin, an AAS resin, an AES resin a poly-4-methylpentene-1 resin, a polybutene-1 resin, a fluorovinylidene resin, a fluorovinyl resin, a fluorine resin, a polycarbonate resin, a polyamide resin, an acetal resin, a polyphenylene oxide resin, a polyester resin (e.g., polyethylene terephthalate, polybutylene terephthalate), a polyphenylene sulfide resin, a polyimide resin, a polysulfone resin, a polyether sulfone resin, an aromatic polyester resin, a polyarylate resin, an olefin/unsaturated carboxylic acid copolymer, and modified derivatives thereof. Among these, the water-dispersible resin binder 2 in the water vapor barrier layer comprises at least one selected from the group consisting of a styrene/butadiene copolymer, a styrene/unsaturated carboxylic acid copolymer and an olefin/unsaturated carboxylic acid copolymer, preferably an olefin/unsaturated carboxylic acid copolymer, more preferably at least one selected from the group consisting of an ethylene/acrylic acid copolymer and an ethylene/methacrylic acid copolymer.

### <<Styrene/Butadiene Copolymer>>

The styrene/butadiene copolymer includes a styrene/butadiene rubber (SBR), and a modified styrene/butadiene rubber (modified SBR).

The modified styrene/butadiene rubber includes an acid-modified styrene/butadiene rubber (acid-modified SBR).

As the styrene/butadiene copolymer, commercial products can be used, and examples thereof include "Nipol LX407S series (tradename)" and "Nipol LX407BP series (tradename)" by Zeon Corporation.

### <<Styrene/Unsaturated Carboxylic Acid Copolymer>>

The styrene/unsaturated carboxylic acid copolymer is a copolymer produced by emulsion polymerization of a styrene monomer, and an unsaturated carboxylic acid monomer, and optionally any other monomer copolymerizable with these. The styrene monomer includes an aromatic vinyl compound such as styrene, α-methylstyrene, vinyltoluene, p-t-butylstyrene, and chlorostyrene.

The unsaturated carboxylic acid monomer includes a monomer of an unsaturated carboxylic acid such as acrylic acid, methacrylic acid, crotonic acid, cinnamic acid, itaconic acid, fumaric acid, maleic acid, and butene-tricarboxylic acid, an unsaturated polycarboxylic acid alkyl ester having at least one carboxy group, such as itaconic acid monoethyl ester, fumaric acid monobutyl ester, and maleic acid monobutyl ester, and a (meth)acrylic sulfonic acid monomer or a salt thereof, such as acrylamidepropanesulfonic acid, sodium salt of sulfoethyl acrylate, or sodium salt of sulfopropyl methacrylate. The other monomer includes an alkyl (carbon number 1 to 24) (meth)acrylate.

The styrene monomer is preferably styrene. The unsaturated carboxylic acid monomer is preferably acrylic acid, methacrylic acid, itaconic acid or fumaric acid.

As the styrene/unsaturated carboxylic acid copolymer, commercial products can be used, and examples thereof include "Harbil series C-3 (tradename)" by Daiichi Toryo Mfg., Ltd., and "Acronal 4160 (tradename)" by BASF Corporation.

### <<Olefin/Unsaturated Carboxylic Acid Copolymer>>

The olefin/unsaturated carboxylic acid copolymer is a copolymer produced by emulsion polymerization of an olefin monomer and an unsaturated carboxylic acid monomer.

The olefin monomer for the olefin/unsaturated carboxylic acid copolymer includes an α-olefin such as ethylene, propylene and butylene, and among these, ethylene is preferred.

The unsaturated carboxylic acid monomer for the olefin/unsaturated carboxylic acid copolymer includes an unsaturated carboxylic acid monomer and an unsaturated carboxylic acid ester monomer that forms a carboxylic acid by hydrolysis. Examples of the unsaturated carboxylic acid monomer for the olefin/unsaturated carboxylic acid copolymer include an unsaturated carboxylic acid, such as acrylic acid, methacrylic acid, crotonic acid, cinnamic acid, itaconic acid, fumaric acid, maleic acid and butene-tricarboxylic acid, and an ester thereof; and an unsaturated polycarboxylic acid alkyl ester having at least one carboxy group, such as itaconic acid monoethyl ester, fumaric acid monobutyl ester and maleic acid monobutyl ester.

One alone or two or more kinds of unsaturated carboxylic acid monomers to constitute the olefin/unsaturated carboxylic acid copolymer can be used either singly or as combined. The olefin/unsaturated carboxylic acid copolymer can be copolymerized with a small amount of any other monomer copolymerizable with an olefin and an unsaturated carboxylic acid monomer.

Among these, the olefin/unsaturated carboxylic acid copolymer is preferably at least one selected from the group consisting of an ethylene/acrylic acid copolymer and an ethylene/methacrylic acid copolymer, more preferably at least one selected from the group consisting of an ethylene/acrylic acid polymer, an ethylene/methacrylic acid copolymer, an ethylene/methyl acrylate copolymer, an ethylene/methyl methacrylate copolymer, an ethylene/ethyl acrylate copolymer, an ethylene/ethyl methacrylate copolymer, an ethylene/butyl acrylate copolymer and an ethylene/butyl methacrylate copolymer, even more preferably an ethylene/acrylic acid copolymer or an ethylene/methacrylic acid copolymer, further more preferably an ethylene/acrylic acid copolymer.

As the olefin/unsaturated carboxylic acid copolymer, commercial products can be used, and examples thereof include an aqueous dispersion of an ethylene/acrylic acid copolymer ammonium salt, "Zaikthene (tradename) AC" by Sumitomo Seika Chemicals Company, Limited.

In the olefin/unsaturated carboxylic acid copolymer, the content of the unsaturated carboxylic acid monomer is preferably 1 mol% or more, more preferably 10 mol% or more, and is preferably 50 mol% or less, more preferably 30 mol% or less. When the content of the unsaturated carboxylic acid monomer falls within the above range, the copolymer betters dispersibility of a layered inorganic compound.

The weight-average molecular weight of the water-dispersible resin binder 2 is, from the viewpoint of the viscosity in applying to the paper substrate and the intensity, preferably 10,000 or more, more preferably 20,000 or more, and is preferably 10,000,000 or less, more preferably 5,000,000 or less.

The content of the water-dispersible resin binder 2 is 50% by mass or more, preferably 60% by mass or more, more preferably 70% by mass or more, and the upper limit thereof is not specifically limited but is preferably 95% by mass or less, in all the solid content in the water vapor barrier layer.

### (Layered Inorganic Compound)

The form of the layered inorganic compound in the water vapor barrier layer is a tabular one having a specific aspect ratio and a specific thickness, and when a mixed solution of the layered inorganic compound and a binder of the water-dispersible resin is formed and applied to the paper substrate, a water vapor barrier layer is formed.

In the present embodiment, in the water vapor barrier layer, as described above, a card house structure is broken and the tabular layered inorganic compound is excellent in dispersibility, and therefore the layered inorganic compounds are aligned as laminated almost in parallel to the planar face (surface) of the paper substrate. With that, the area where the layered inorganic compounds do not exist is small in the planar direction of the paper substrate, to thereby prevent water vapor penetration therethrough. In addition, in the thickness direction of the paper substrate, the tabular layered inorganic compounds exist as aligned almost in parallel to the paper substrate, and therefore water vapor in the water vapor barrier layer shall run through the layer while going around the layered inorganic compounds and is prevented from penetrating through the layer. As a result, the water vapor barrier layer can exhibit excellent water vapor barrier properties.

### <<Thickness (average thickness)>>

The thickness (average thickness) of the layered inorganic compound is 50 nm or less, preferably 30 nm or less, more preferably 10 nm or less, and the lower limit thereof is, though not specifically limited, for example, 0.5 nm or more, preferably 1 nm or more. When the average thickness of the layered inorganic compound is smaller, the number of laminated layers of the layered inorganic compounds is larger in the water vapor barrier layer, and therefore the water vapor barrier layer of the type can exhibit high water vapor barrier properties. Here, the thickness of the layered inorganic compound contained in the water vapor barrier layer is determined as follows.

First, an enlarged picture of a cross section in the vertical direction of the water vapor barrier layer is taken with an electronic microscope. At that time, the magnification is such that about 20 to 30 layered inorganic compounds can be contained in the cross section. Next, the thickness of each layered inorganic compound in the cross section is measured. With n = 20, the found data of the thickness are averaged to determine the thickness (average thickness) of the layered inorganic compound.

### <<Length (average length)>>

The length (average length) of the layered inorganic compound is preferably 0.3 µm or more, more preferably 0.5 µm or more, even more preferably 1 µm or more, further more preferably 5 µm or more, and is preferably 100 µm or less, more preferably 80 µm or less. When the length of the layered inorganic compound is 0.3 µm or more, the layered inorganic compound can be readily aligned in parallel to the paper substrate. When the length of the layered inorganic compound is 100 µm or less, there is little risk that a part of the layered inorganic compound protrudes from the water vapor barrier layer. Here, the length of the layered inorganic compound contained in the water vapor barrier layer is determined as follows.

First, an enlarged picture of a vertical cross section of the water vapor barrier layer is taken with an electronic microscope. At that time, the magnification is such that about 20 to 30 layered inorganic compounds can be contained in the cross section. Next, the length of each layered inorganic compound in the cross section is measured. With n = 20, the found data of the length are averaged to determine the length of the layered inorganic compound. The length of the layered inorganic compound may be described as an expression of a particle diameter.

### <<Aspect Ratio>>

The aspect ratio of the layered inorganic compound is 50 or more, preferably 100 or more, more preferably 300 or more, even more preferably 500 or more. When the aspect ratio is larger, water vapor penetration can be prevented more, and water vapor barrier properties can improve more. In addition, when the aspect ratio is larger, the amount to be added of the layered inorganic compound can be reduced more. The upper limit of the aspect ratio is not specifically limited but is, from the viewpoint of the viscosity of coating liquid and of availability, preferably around 10000 or less. Here, the aspect ratio is a value calculated by dividing the average length of the layered inorganic compound by the average thickness thereof determined according to the above-mentioned method by taking an enlarged picture of the cross section of the water vapor barrier layer with an electronic microscope.

The layered inorganic compound includes mica, kaolin, pyrophyllite, talc, bentonite, montmorillonite, vermiculite, chlorite, septechlorite, serpentine, and stilpnomelane.

Among these, the layered inorganic compound that the water vapor barrier layer contains is, from the viewpoint of improving water vapor barrier properties, at least one selected from the group consisting of mica and bentonite, more preferably mica. Mica includes synthetic mica, muscovite, sericite, phlogopite, biotite, fluorophlogopite (artificial mica), lepidolite, soda mica, vanadium mica, illite, tin mica, paragonite, and brittle mica, and synthetic mica is preferred. Bentonite includes montmorillonite.

The content of the layered inorganic compound is preferably 1% by mass or more, more preferably 2% by mass or more, even more preferably 5% by mass or more, and is preferably 80% by mass or less, more preferably 70% by mass or less, even more preferably 30% by mass or less, further more preferably 20% by mass or less, further more preferably 15% by mass or less, in the total solid content of the water vapor barrier layer.

In the present embodiment, by increasing the aspect ratio of the layered inorganic compound and by reducing the thickness thereof, the strength of the water vapor barrier layer can be increased even though the content of the layered inorganic compound in the water vapor barrier layer is small and the layered inorganic compound can be prevented from dropping off from the water vapor barrier layer to secure excellent water vapor barrier properties, and accordingly, the content of the layered inorganic compound in the layer can be reduced.

The content of the layered inorganic compound is preferably 0.1 parts by mass or more, more preferably 1.0 parts by mass or more, even more preferably 3.0 parts by mass or more, further more preferably 5.0 parts by mass or more, and is 100 parts by mass or less, preferably 50 parts by mass or less, more preferably 30 parts by mass or less, even more preferably 25 parts by mass or less, relative to 100 parts by mass of the water-dispersible resin binder 2. When the content of the layered inorganic compound falls within the above range, the layered inorganic compound is hardly exposed out of the surface of the water vapor barrier layer to secure excellent water vapor barrier properties.

### (Cationic Resin)

In the present embodiment, by adding a cationic resin to the water vapor barrier layer containing a layered inorganic compound, water vapor barrier properties can be greatly enhanced.

The reason why water vapor barrier properties can be greatly enhanced by adding a cationic resin is considered to be as follows. It is known that, in a layered inorganic compound, the planar part of the tabular form can be readily charged to be anionic and the edge part can be readily charged to be cationic, therefore forming a so-called card house structure of layered inorganic compounds mutually stereographically aggregated with each other. Owing to the card house structure, the viscosity of an aqueous dispersion of the layered inorganic compound can be extremely high. On the other hand, the card house structure is readily broken by force of stirring or the like, and therefore an aqueous dispersion of the layered inorganic compound exhibits thixotropy.

It is considered that, when an appropriate cationic resin is added to an aqueous dispersion of the layered inorganic compound, the cationic resin can be adsorbed to the anionic plane part of the layered inorganic compound and the card house structure is thereby broken. As a result, it is presumed that the layered inorganic compound can be prevented from being stereographically aggregated, and the tabular layered inorganic compound can be readily layered in parallel to the face of the paper substrate to improve water vapor barrier properties.

The cationic resin comprises at least one selected from the group consisting of a polyamine resin, a cation-modified polyamide resin (e.g., amine-modified polyamide resin), a polyamide-epichlorohydrin resin, a polyethyleneimine resin, a polyalkylene polyamine resin, a polyamide compound, a polyamideamine-epihalohydrin or formaldehyde condensation product, a polyamine-epihalohydrin or formaldehyde condensation product, a polyamide polyurea-epihalohydrin or formaldehyde condensation product, a polyamine polyurea-epihalohydrin or formaldehyde condensation product, a polyamideamine polyurea-epihalohydrin or formaldehyde condensation product, a polyamide polyurea compound, a polyamine polyurea compound, a polyamideamine polyurea compound, a polyamideamine compound, a polyvinylpyridine, an amino-modified acrylamide compound, a polyvinylamine resin, and a polydiallyldimethylammonium chloride. Among these, the cationic resin is preferably at least one selected from a polyamine resin, a cation-modified polyamide resin, a polyamide-epichlorohydrin resin and a polyethyleneimine resin, more preferably a cation-modified polyamide resin.

As the cationic resin, commercial products can be used, and examples thereof include "Sumirez Resin SPI-203(50) (tradename)", "Sumirez Resin SPI-102A (tradename)", and "Sumirez Resin SPT-106N (tradename)" by Taoka Chemical Co., Ltd.

The surface charge of the cationic resin is preferably 0.1 meq/g or more, and is preferably 10 meq/g or less, more preferably 5.0 meq/g or less. When the surface charge of the cationic resin falls within the above range, the resin can break a card house structure and can suitably coexist with the water-dispersible resin binder 2.

The surface charge of the cationic resin is measured according to the following method. First, a polymer to be a sample is dissolved in water to prepare a solution having a polymer concentration of 1 ppm. Using a charge analyzer Mutek PCD-04 Model (by BTG Corporation), 0.001 N sodium polyethylenesulfonate is dropwise added to the resultant solution to measure the charge amount of the sample.

The content of the cationic resin may be appropriately selected depending on the kind of the layered inorganic compound and the water-dispersible resin binder 2 to be used in the water vapor barrier layer and is, from the viewpoint of improving water vapor barrier properties, 1 part by mass or more, preferably 3 parts by mass or more, more preferably 10 parts by mass or more, further more preferably 25 parts by mass or more, and is 300 parts by mass or less, preferably 200 parts by mass or less, more preferably 100 parts by mass or less, further more preferably 80 parts by mass or less, relative to 100 parts by mass of the layered inorganic compound.

Also the content of the cationic resin is preferably 0.1 parts by mass or more, more preferably 1 part by mass or more, even more preferably 3 parts by mass or more, further more preferably 4.8 parts by mass or more, and is preferably 50 parts by mass or less, more preferably 20 parts by mass or less, even more preferably 15 parts by mass or less, further more preferably 12 parts by mass or less, relative to 100 parts by mass of the water-dispersible resin binder 2 in the water vapor barrier layer.

If desired, a dispersant, a surfactant, a defoaming agent, a wetting agent, a dye, a color regulator, a thickener and the like can optionally be added to the water vapor barrier layer, in addition to the layered inorganic compound, the cationic resin and the water-dispersible resin binder 2.

The thickness of the water vapor barrier layer is preferably 1 µm or more, more preferably 3 µm or more, and is preferably 30 µm or less, more preferably 20 µm or less. Also, the coating amount of the water vapor barrier layer is 1 g/m² or more, preferably 3 g/m² or more, and is preferably 30 g/m² or less, more preferably 20 g/m² or less, even more preferably 15 g/m² or less, as a solid content therein.

### <Sealant Layer>

The barrier laminate has on at least one surface of the paper substrate, a gas barrier layer and a water vapor barrier layer in that order, and can further have a sealant layer on at least one outermost layer of the barrier laminate. Namely, the sealant layer can be formed on the paper substrate not having a gas barrier layer and a water vapor barrier layer, or can be formed on the water vapor barrier layer on the paper substrate having a gas barrier layer and a water vapor barrier layer thereon in that order. In the case where the barrier laminate has a gas barrier layer and a water vapor barrier layer in that order on both surfaces of a paper substrate, the sealant layer can be formed on one water vapor barrier layer, or can be formed on both water vapor barrier layers.

The sealant layer is a layer that melts to be adhesive by heating or ultrasonic application. Preferably, the sealant layer contains a water-dispersible resin or a biodegradable resin, more preferably contains a biodegradable resin. The water-dispersible resin includes those described hereinabove as the water-dispersible resin binder 1 in the gas barrier layer or those also described hereinabove as the backbone polymer for the water-dispersible resin binder 2 in the water vapor barrier layer.

### <<Biodegradable Resin>>

Not specifically limited, the biodegradable resin includes a polylactic acid, a polybutylene succinate, a polybutylene succinate adipate, a polybutylene adipate terephthalate, and 3-hydroxybutanoic acid/3-hydroxyhexanoic acid copolymer.

As the biodegradable resin, commercial products can be used, and examples of a polylactic acid include "Landy PL series (tradename)" by Miyoshi Oil & Fat Co., Ltd.

The thickness of the sealant layer is preferably 1 µm or more, more preferably 3 µm or more, and is preferably 50 µm or less, more preferably 30 µm or less. The coating amount of the sealant layer is preferably 0.5 g/m² or more, more preferably 1 g/m² or more, and is preferably 50 g/m² or less, more preferably 30 g/m² or less, even more preferably 10 g/m² or less, as a solid content.

### <Production Method for Barrier Laminate>

The barrier laminate of the present embodiment has a gas barrier layer and a water vapor barrier layer formed on at least one surface of a paper substrate in that order. The layer formation method is not specifically limited, but preferably the layers are formed by a coating method. Specifically, it is preferable that a gas barrier layer coating liquid (gas barrier layer coating composition) is applied to a paper substrate and dried to form a gas barrier layer, and thereafter a water vapor barrier layer coating liquid (water vapor barrier layer coating composition) is applied thereto and dried to form a water vapor barrier layer.

In the case where plural coating layers are formed on a paper substrate, the above-mentioned method of successively forming the coating layers is preferred, but is not limitative. A simultaneous multilayer coating method can also be employed. The simultaneous multilayer coating method is a method of jetting out plural kinds of coating liquids separately through slit nozzles to form a liquid laminate, and applying the resultant laminate onto a paper substrate to simultaneously form multilayer coating films.

Not specifically limited, the coating device for coating a paper substrate with a coating liquid may be any known device. Examples of the coating device include a blade coater, a bar coater, an air knife coater, a slit die coater, a gravure coater, a microgravure coater, and a gate roll coater. Especially in forming a water vapor barrier layer, a coater capable of scraping the surface to be coated, such as a blade coater, a bar coater, an air knife coater or a slit die coater is preferred as promoting orientation of the layered inorganic compounds in the formed layer.

Also not specifically limited, the drying device for drying the coating layer may be any known device. Examples of the coating device include a hot air drier, an IR drier, a gas burner and a hot plate. The drying temperature can be appropriate set in consideration of the drying time or the like.

Not specifically limited, the solvent for the coating liquid of each layer can be water or an organic solvent such as ethanol, isopropyl alcohol, methyl ethyl ketone or a toluene.

Among these, from the viewpoint of absence of problems of volatile organic solvents, water is preferred for the dispersant for the coating liquid of each layer. Namely, the gas barrier layer coating liquid is preferably an aqueous composition for a gas barrier layer, and the water vapor barrier layer coating liquid is preferably an aqueous composition for a water vapor barrier layer.

Not specifically limited, the solid content of the coating liquid for each layer can be appropriately selected from the viewpoint of coatability and dryability, and is preferably 3% by mass or more, more preferably 5% by mass or more, even more preferably 10% by mass or more, further more preferably 15% by mass or more, and is preferably 80% by mass or less, more preferably 70% by mass or less, even more preferably 60% by mass or less.

### <Properties of Barrier Laminate>

### (Water Vapor Transmission Rate)

Regarding the water vapor transmission through the barrier laminate, water vapor can hardly penetrate therethrough when the water vapor transmission rate of the barrier laminate is lower, so it is preferable. Specifically, the water vapor transmission rate of the barrier laminate is preferably 100 g/(m² ·day) or less, more preferably 50 g/(m² ·day) or less, even more preferably 30 g/(m² ·day) or less, further more preferably 20 g/(m² ·day) or less.

The water vapor transmission rate of the barrier laminate is measured according to the method described in the section of Examples.

### (Oxygen Transmission Rate)

Regarding the oxygen transmission through the barrier laminate, oxygen can hardly penetrate therethrough when the oxygen transmission rate of the barrier laminate is lower, so it is preferable. Specifically, the oxygen transmission rate at 23°C and 50% RH is preferably 30 mL/(m² ·day ·atm) or less, more preferably 10 mL/(m² ·day ·atm) or less, even more preferably 5 mL/(m² ·day ·atm) or less, further more preferably less than 3 mL/(m² ·day ·atm). Also the oxygen transmission rate of the barrier laminate in a high humidity environment (23°C, 85% RH) is preferably 50 mL/(m² ·day ·atm) or less, more preferably 30 mL/(m² ·day ·atm) or less, even more preferably 20 mL/(m² ·day ·atm) or less, further more preferably 10 mL/(m² ·day ·atm) or less, especially more preferably less than 8 mL/(m² ·day ·atm).

The oxygen transmission rate of the barrier laminate is measured according to the method described in the section of Examples.

### (Contact Angle)

The contact angle of the barrier laminate is preferably higher. Specifically, it is preferably 50° or more, more preferably 60° or more, even more preferably 70° or more, and though not specifically limited but is preferably 120° or less.

The contact angle of the barrier laminate is a value of a contact angle thereof with water, measured using a dynamic contact angle tester (1100DAT by Fibro Corporation) according to JIS R 3257:1999, in which 1 to 4 µl of distilled water is dropped onto the outermost layer of the barrier layer, and in 60 seconds after the dropping, the contact angle with water is measured.

The barrier laminate of the present embodiment has a gas barrier layer and a water vapor barrier layer in that order thereon, in which, therefore, fine pores and cracks existing in the surface of the gas barrier layer can be filled up with the water vapor barrier layer to improve gas barrier properties and, in addition, the gas barrier layer can act as an undercoat layer below the water vapor barrier layer to make the water vapor barrier layer a uniform layer. In addition, the barrier laminate of the present embodiment contains a layered inorganic compound, a cationic resin and a water-dispersible resin binder 2 in the water vapor barrier layer, and therefore the layered inorganic compounds in the water vapor barrier layer do not form a card house structure and can be laminated in a uniformly dispersed state to secure excellent water vapor barrier properties.

Taking advantage of excellent gas barrier properties and water vapor barrier properties, the gas barrier laminate of the present embodiment can be favorably used as packaging materials for foods, medical supplies and electronic parts or the like.

### EXAMPLES

The invention is described more specifically with reference to the following Examples and Comparative Examples. In the following Examples, the material used, its amount and ratio, the details of the treatment and the treatment process can be suitably modified or changed not overstepping the spirit and the scope of the invention. Accordingly, the invention should not be limitatively interpreted by the Examples mentioned below. In Examples and Comparative Examples, "part" and "%" are "part by mass" and "% by mass" respectively, unless otherwise specifically indicated. Also unless otherwise specifically indicated, the operations in Examples and Comparative Examples were carried out under the condition of 20 to 25°C and 40 to 50% RH.

### [Analysis and Evaluation]

The cationic resins used in Examples and Comparative Examples were analyzed as follows. In addition, the barrier laminates of Examples and Comparative Examples were analyzed and evaluated as follows.

### <Cationic Resin>

### (Surface Charge)

First, the polymer to be a sample was dissolved in water to prepare a solution having a polymer concentration of 1 ppm. Using a charge analyzer Mutek PCD-04 Model (by BTG Corporation), 0.001 N sodium polyethylenesulfonate was dropwise added to the resultant solution to measure the charge amount of the sample.

### <Barrier Laminate>

### (Water Vapor Transmission Rate)

The water vapor transmission rate of the barrier laminate was measured according to the Method B of JIS Z 0208:1976 (cup method) (temperature 40 ± 0.5°C, relative humidity 90 ± 2%), in which the water vapor barrier layer of the barrier laminate was set inside (condition B: temperature 40 ± 0.5°C, relative humidity 90 ± 2%).

### (Oxygen Transmission Rate)

Using an oxygen transmission rate measuring apparatus (OX-TRAN2/20, by MOCON Corporation), the oxygen transmission rate of the barrier laminate and the urethane resin was measured under the condition of 23°C and 50% RH or 85% RH.

### (Contact Angle)

Using a dynamic contact angle tester (1100DAT by Fibro Corporation) according to JIS R 3257:1999, the contact angle of the barrier laminate was measured, in which 1 to 4 µl of distilled water was dropped onto the outermost layer of the barrier layer, and in 60 seconds after the dropping, the contact angle was measured.

### (Waterproofness)

Regarding the waterproofness of the barrier laminate, water at 60°C was dropwise added to the outermost layer of the barrier laminate, kept for 1 minute, then wiped off, and the surface condition of the barrier laminate was observed and evaluated according to the following criteria.
A: Neither sticky nor dissolved.
B: Sticky and dissolved.

### (Heat Sealability)

A pair of barrier laminates were stacked with the coating layers facing each other, and heat-sealed under the condition of 160°C, 2.0 kgf/cm² for 1 second using a heat press tester to produce a laminate. The laminate was cut to prepare rectangular measurement samples each having a width of 15 mm and a length of 100 mm. The resultant samples were evaluated according to the following criteria. In each measurement sample, an unheat-sealed area was formed at the edge so as to be held by hand for peeling the measurement sample.
A: When peeled by hand, the substrate broke.
B: When peeled by hand, the substrate did not break and peeled from the coating layer.

### [Example 1]

### <Preparation of gas barrier layer coating composition>

25 parts of an aqueous dispersion of a synthetic mica ("NTO-05 (tradename)" by Topy Industries, Limited, particle size: 6.3 µm, aspect ratio: about 1000, thickness: about 5 nm, solid content: 6%, catalogue values) was added to 100 parts of an aqueous solution having a solid concentration of 15% of an ethylene-modified polyvinyl alcohol ("Exceval AQ-4104 (tradename)" by Kuraray Co., Ltd., completely saponified type), and further, 13.6 parts of an aqueous dispersion having a solid concentration of 55%, prepared by dispersing an engineered kaolin ("Varisurf HX (tradename)", by Imerys Minerals Japan K.K., particle size: 10 µm, aspect ratio: about 100, thickness: about 100 nm, catalogue values) in water, was added thereto to prepare a gas barrier layer coating composition.

### <Preparation of Water Vapor Barrier Layer Coating Composition>

With stirring, 34.3 parts of an aqueous dispersion of an ethylene/acrylic acid copolymer ammonium salt ("Zaikthene AC (tradename)" by Sumitomo Seika Chemicals Company, Limited., solid content: 29.2%, catalogue value) was added to 19.7 parts of an aqueous dispersion of a synthetic mica ("NTO-05 (tradename)" by Topy Industries, Limited, particle size: 6.3 µm, aspect ratio: about 1000, thickness: about 5 nm, solid content: 6%, catalogue values), and further stirred. To this, 1.7 parts of a cation-modified polyamide resin ("Sumirez Resin SPI-203(50)H (trade name)" by Taoka Chemical Co., Ltd., surface charge: 0.4 meq/g, solid content 53%, catalogue values) was added and stirred. Further, 0.1 parts of an aqueous 25% ammonia solution was added and stirred. Further, water was added so that the solid concentration could be 20%, and stirred to prepare a water vapor barrier layer coating composition.

### <Production of Barrier Laminate>

Using a Mayer bar, the resultant gas barrier layer coating composition was applied to bleached kraft paper (basis weight: 50 g/m², thickness: 60 µm, pulp CSF: 500 mL, sizing degree: 15 seconds) so that the coating amount of the gas barrier layer after dried could be 3 g/m², and then dried in a hot air drier at 120°C for 1 minute. Further, using a Mayer bar, the resultant water vapor barrier layer coating composition was applied onto the gas barrier layer so that the coating amount after dried could be 6 g/m², and then dried in a hot air drier at 120°C for 1 minute to produce a barrier laminate. Evaluation and analysis results are shown in Table 1.

### [Example 2]

A barrier laminate was produced in the same manner as in Example 1, except that the aqueous dispersion of engineered kaolin was not blended in the gas barrier layer coating composition.

### [Example 3]

A barrier laminate was produced in the same manner as in Example 1, except that the aqueous dispersion of synthetic mica blended in the water vapor barrier layer coating composition was changed to an aqueous dispersion of bentonite having a solid concentration of 4.5%, prepared by dispersing bentonite ("Kunipia G4 (tradename)" by Kunimine Industries Co., Ltd., particle size: about 500 nm, aspect ratio: about 500, thickness: about 1 nm, catalogue values) in water, that the blending amount was changed from 19.7 parts to 40 parts, and that the solid concentration of the water vapor barrier layer coating composition was changed from 20% to 16%.

### [Example 4]

Using a Mayer bar, a sealant layer coating composition of an aqueous dispersion of an ethylene/acrylic acid copolymer ammonium salt ("Zaikthene AC (tradename)" by Sumitomo Seika Chemicals Company, Limited., solid content: 29.2%) was applied onto the water vapor barrier layer of the barrier laminate produced in Example 1, in such a manner that the coating amount of the sealant layer after dried could be 2 g/m², and then dried in a hot air drier at 120°C for 1 minute to produce a barrier laminate.

### [Example 5]

A barrier laminate was produced in the same manner as in Example 1, except that the gas barrier layer coating composition was prepared as follows.

33.3 parts of an aqueous dispersion of a synthetic mica ("NTO-05 (tradename)" by Topy Industries, Limited, particle size: 6.3 µm, aspect ratio: about 1000, thickness: about 5 nm, solid content: 6%, catalogue values) was added to 33.3 parts of a polyurethane dispersion ("Takelac WPB-341 (tradename)" by Mitsui Chemicals, Inc., solid content: 30%, catalogue value; oxygen permeability rate at 23°C and 50% RH as 25-pm thick sheet: 2.0 mL/(m² ·day ·atm)), and stirred. To this, 0.94 parts of a cation-modified polyamide resin ("Sumirez Resin SPI-203(50)H (trade name)" by Taoka Chemical Co., Ltd., surface charge: 0.4 meq/g, solid content 53%, catalogue values) was added and stirred. Further, 0.2 parts of an aqueous 25% ammonia solution was added and stirred. Further water was added so that the solid concentration could be 15% to prepare a gas barrier layer coating composition. The urethane resin was subjected to ¹H-NMR analysis, which confirmed that the content of the metaxylylene diisocyanate-derived structural unit to the entire amount of the polyisocyanate-derived structural units was 50 mol% or more.

### [Example 6]

A barrier laminate was produced in the same manner as in Example 5, except that, in preparing the water vapor barrier layer coating composition, the blending amount of the aqueous dispersion of synthetic mica in the water vapor barrier layer coating composition was changed to 30.0 parts, the blending amount of the aqueous dispersion of ethylene/acrylic acid copolymer ammonium salt was to 4.2 parts, the blending amount of the cation-modified polyamide resin was to 0.94 parts, and the blending amount of the aqueous 25% ammonia solution was to 0.2 parts, and that the coating amount of the water vapor barrier layer was changed to 4 g/m².

### [Comparative Example 1]

A barrier laminate was produced in the same manner as in Example 1, except that the gas barrier layer and the water vapor barrier layer were reversed upside down and the gas barrier layer was formed on the water vapor barrier layer.

### [Comparative Example 2]

A barrier laminate was produced in the same manner as in Example 1, except that the aqueous dispersion of synthetic mica was not blended in the gas barrier layer coating composition, the blending amount of the aqueous dispersion of engineered kaolin was changed from 13.6 parts to 27.3 parts, the water vapor barrier layer coating composition was prepared as follows, and the coating amount of the water vapor barrier layer after dried was changed from 6 g/m² to 12 g/m².

With stirring, 47.8 parts of an aqueous dispersion having a solid concentration of 55%, prepared by dispersing an engineered kaolin ("Varisurf HX (tradename)", by Imerys Minerals Japan K.K., particle size: 10 µm, aspect ratio: about 100, thickness: about 100 nm) in water, was added to 45 parts of an aqueous dispersion of an ethylene/acrylic acid copolymer ammonium salt ("Zaikthene AC (tradename)" by Sumitomo Seika Chemicals Company, Limited., solid content: 29.2%). To this, 1 part by mass of a cation-modified polyamide resin ("Sumirez Resin SPI-203(50)H (trade name)" by Taoka Chemical Co., Ltd., solid content 53%) was added and stirred. Further, 0.16 parts of an aqueous 25% ammonia solution was added and stirred. Further, water was added so that the solid concentration could be 40%, and stirred to prepare a water vapor barrier layer coating composition.

**Table 1**

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| Gas Barrier Layer | Resin Binder | Kind | - | Aqueous So lution of Ethyl ene-modified Polyvinyl Alcohol | | | | Urethane Dispersion | | Aqueous Ethylene-Polyvinyl Solution of modified Alcohol | |
| | | Content (in solid) | mass% | 63 | 91 | 63 | 63 | 80 | 80 | 63 | 50 |
| | Layered Inorganic Compound | Synthetic Mica Content (in solid) | mass% | 6 | 9 | 6 | 6 | 16 | 16 | 6 | |
| | | Engineered Kaolin Content (in solid) | mass% | 31 | | 31 | 31 | | | 31 | 50 |
| | Cationic Resin | Cation-Modified Polyamide Resin Content (in solid) | mass% | | | | | 4 | 4 | | |
| | Coating Amount | | g/m² | 3 | | | | | | | |
| Water Vapor Barrier Layer | Resin Binder | Kind | - | Aqueous Solution of Ethylene/Acrylic Acid Copolymer Ammonium Salt | | | | | | | |
| | | Content (in solid) | mass% | 82.6 | 82.6 | 78.6 | 82.6 | 82.6 | 81.0 | 82.6 | 32.9 |
| | Layered Inorganic Compound | Kind | - | Synthetic Mica | Synthetic Mica | Bentonite | Synthetic Mica | Synthetic Mica | Synthetic Mica | Synthetic Mica | Engineered Kaolin |
| | | Aspect Ratio | - | 1000 | 1000 | 500 | 1000 | 1000 | 1000 | 1000 | 100 |
| | | Thickness | nm | 5 | 5 | 1 | 5 | 5 | 5 | 5 | 100 |
| | | Content relative to 100 parts by mass of water-dispersible resin binder | part by mass r | 12 | 12 | 18 | 12 | 12 | 18 | 12 | 200 |
| | | Content (in solid) | mass% | 9.8 | 9.8 | 14.1 | 9.8 | 9.8 | 14.6 | 9.8 | 65.7 |
| | Cationic Resin | Kind | - | Cation-modified Po lyamide Resin | | | | | | | |
| | | Content (in solid) | mass% | 7.4 | 7.4 | 7.0 | 7.4 | 7.4 | 4.0 | 7.4 | 1.3 |
| | Coating Amount | | g/m² | 6 | | | | | 4 | 6 | 12 |
| Sealant Layer | Resin | Kind | - | | | | Aqueous Solution of Ethylene/ Acrylic Acid Copolymer Ammonium Salt | | | | |
| | Coating Amount | | g/m² | | | | 2 | | | | |
| Barrier Laminate | First Layer | | | Gas Barrier Layer | Gas Barrier Layer | Gas Barrier Layer | Gas Barrier Layer | Gas Barrier Layer | Gas Barrier Layer | Water Vapor Barrier Layer | Gas Barrier Layer |
| | Second Layer | | | Water Vapor Barrier Layer | Water Vapor Barrier Layer | Water Vapor Barrier Layer | Water Vapor Barrier Layer | Water Vapor Barrier Layer | Water Vapor Barrier Layer | Gas Barrier Layer | Water Vapor Barrier Layer |
| | Third Layer | | | - | - | - | Sealant Layer | - | - | - | - |
| | Evaluation | Water Vapor Transmission Rate (g/(m² ·day)) | | 2.3 | 2.3 | 18.9 | 1.9 | 3.8 | 2.9 | 1.8 | 70.3 |
| | | Oxygen Transmission Rate (mL/m² ·day ·atm)) (23°C 50% RH) | | 2.6 | 1.7 | 2.8 | 1.8 | 0.9 | 0.8 | 3.0 | >1000 |
| | | Oxygen Transmission Rate (mL/m² ·day ·atm)) (23°C 85% RH) | | 22 | 20 | 25 | 19 | 7.8 | 7.4 | 25 | >1000 |
| | | Contact Angle (°) | | 77.4 | 77.4 | 77.1 | 78.8 | 77.6 | 77.8 | 33.5 | 77.1 |
| | | Waterproofness | | A | A | A | A | A | A | B | A |
| | | Heat Sealability | | A | A | A | A | A | A | B | A |

As known from Table 1, the present embodiment can provide a barrier laminate excellent in water vapor barrier properties and gas barrier properties, having waterproofness and heat sealability and excellent in economic potential, even though the number of the layers therein is small. Further, the barrier laminates of Examples 5 and 6 where the gas barrier layer contains a urethane resin are excellent in gas barrier properties in a high humidity environment.

## Claims

1. A barrier laminate comprising a paper substrate and, on at least one surface of the paper substrate, a gas barrier layer and a water vapor barrier layer in that order, wherein:
the gas barrier layer comprises at least one selected from the group consisting of a water-soluble resin binder and a water-dispersible resin binder 1, wherein
the water-soluble resin binder comprises at least one selected from the group consisting of a polyvinyl alcohol and a modified polyvinyl alcohol,
when the gas barrier layer comprises the water-soluble resin binder, the content of the water-soluble resin binder in the gas barrier layer is 50% by mass or more in the solid content of the gas barrier layer,
the water-dispersible resin binder 1 in the gas barrier layer comprises at least one selected from the group consisting of a urethane resin and a vinylidene chloride resin,
when the gas barrier layer comprises the water-dispersible resin binder 1, the content of the water-dispersible resin binder 1 in the gas barrier layer is 50% by mass or more in the solid content of the gas barrier layer,
the water vapor barrier layer comprises a layered inorganic compound, a cationic resin and a water-dispersible resin binder 2,
wherein
the layered inorganic compound comprised in the water vapor barrier layer comprises at least one selected from the group consisting of mica and bentonite,
the cationic resin comprises at least one selected from the group consisting of a polyamine resin, a cation-modified polyamide resin, a polyamide-epichlorohydrin resin, a polyethyleneimine resin, a polyalkylene polyamine resin, a polyamide compound, a polyamideamine-epihalohydrin or formaldehyde condensation product, a polyamine-epihalohydrin or formaldehyde condensation product, a polyamide polyurea-epihalohydrin or formaldehyde condensation product, a polyamine polyurea-epihalohydrin or formaldehyde condensation product, a polyamideamine polyurea-epihalohydrin or formaldehyde condensation product, a polyamide polyurea compound, a polyamine polyurea compound, a polyamideamine polyurea compound, a polyamideamine compound, a polyvinylpyridine, an amino-modified acrylamide compound, a polyvinylamine resin, and a polydiallyldimethylammonium chloride,
the content of the cationic resin in the water vapor barrier layer is 1 part by mass or more and 300 parts by mass or less relative to 100 parts by mass of the layered inorganic compound,
the water-dispersible resin binder 2 in the water vapor barrier layer comprises at least one selected from the group consisting of a styrene/butadiene copolymer, a styrene/unsaturated carboxylic acid copolymer and an olefin/unsaturated carboxylic acid copolymer,
the content of the water-dispersible resin binder 2 is 50% by mass or more in all the solid content in the water vapor barrier layer,
the water-dispersible resin binder 1 and the water-dispersible resin binder 2 are not the same,
the layered inorganic compound has an aspect ratio of 50 or more,
the layered inorganic compound has a thickness of 50 nm or less, and
the content of the layered inorganic compound in the water vapor barrier layer is 0.1 parts by mass or more and 100 parts by mass or less relative to 100 parts by mass of the water-dispersible resin binder 2,
wherein the coating amount of the gas barrier layer is, as a solid content thereof, 0.1 g/m² or more, and
wherein the coating amount of the water vapor barrier layer is 1 g/m² or more as a solid content therein.

2. The barrier laminate according to claim 1, wherein the surface charge of the cationic resin is 0.1 meq/g or more and 10 meq/g or less.

3. The barrier laminate according to claim 1 or 2, wherein the gas barrier layer further comprises a layered inorganic compound.

4. The barrier laminate according to claim 3, wherein the layered inorganic compound comprised in the gas barrier layer is at least one selected from the group consisting of mica and kaolin.

5. The barrier laminate according to any one of claims 1 to 4, wherein the content of the cationic resin in the water vapor barrier layer is 1 part by mass or more and 50 parts by mass or less relative to 100 parts by mass of the water-dispersible resin binder 2.

6. The barrier laminate according to any one of claims 1 to 5, further comprising a sealant layer on at least one outermost layer.

7. The barrier laminate according to claim 6, wherein the sealant layer comprises a biodegradable resin.

8. The barrier laminate according to any one of claims 1 to 7, which is for a wrapping material.

## Patentansprüche

1. Ein Sperrschichtlaminat, das ein Papiersubstrat und auf mindestens einer Oberfläche des Papiersubstrats eine Gassperrschicht und eine Wasserdampfsperrschicht in dieser Reihenfolge umfasst, wobei:
die Gassperrschicht mindestens eines ausgewählt aus der Gruppe bestehend aus einem wasserlöslichen Harzbindemittel und einem wasserdispergierbaren Harzbindemittel 1 umfasst,
wobei
das wasserlösliche Harzbindemittel mindestens eines ausgewählt aus der Gruppe bestehend aus einem Polyvinylalkohol und einem modifizierten Polyvinylalkohol umfasst,
wenn die Gassperrschicht das wasserlösliche Harzbindemittel umfasst, ist der Gehalt des wasserlöslichen Harzbindemittels in der Gassperrschicht 50 Massen-% oder mehr bezogen auf den Feststoffgehalt der Gassperrschicht,
das wasserdispergierbare Harzbindemittel 1 in der Gassperrschicht mindestens eines ausgewählt aus der Gruppe bestehend aus einem Urethanharz und einem Vinylidenchloridharz umfasst,
wenn die Gassperrschicht das wasserdispergierbare Harzbindemittel 1 umfasst, ist der Gehalt des wasserdispergierbaren Harzbindemittels 1 in der Gassperrschicht 50 Massen-% oder mehr bezogen auf den Feststoffgehalt der Gassperrschicht,
die Wasserdampfsperrschicht eine geschichtete anorganische Verbindung, ein kationisches Harz und ein wasserdispergierbares Harzbindemittel 2 umfasst,
wobei
die in der Wasserdampfsperrschicht enthaltene geschichtete anorganische Verbindung mindestens eines ausgewählt aus der Gruppe bestehend aus Glimmer und Bentonit umfasst,
das kationische Harz umfasst mindestens eines umfasst ausgewählt aus der Gruppe bestehend aus einem Polyaminharz, einem kationmodifiziertem Polyamidharz, einem Polyamid-Epichlorhydrin-Harz, einem Polyethyleniminharz, einem Polyalkylenpolyaminharz, einer Polyamidverbindung, einem Polyamidamin-Epihalogenhydrin- oder Formaldehyd-Kondensationsprodukt, einem Polyamin-Epihalogenhydrin- oder Formaldehyd-Kondensationsprodukt, einem Polyamid-Polyharnstoff-Epihalogenhydrin- oder Formaldehyd-Kondensationsprodukt, einem Polyamin-Polyharnstoff-Epihalogenhydrin- oder Formaldehyd-Kondensationsprodukt, einem Polyamidamin-Polyharnstoff-Epihalogenhydrin- oder Formaldehyd-Kondensationsprodukt, einer Polyamid-Polyharnstoffverbindung, einer Polyamin-Polyharnstoffverbindung, einer Polyamidamin-Polyharnstoffverbindung, einer Polyamidaminverbindung, einem Polyvinylpyridin, einer aminomodifizierten Acrylamidverbindung, einem Polyvinylaminharz und einem Polydiallyldimethylammoniumchlorid,
der Gehalt des kationischen Harzes in der Wasserdampfsperrschicht beträgt 1 Massenteil oder mehr und 300 Massenteile oder weniger bezogen auf 100 Massenteile der geschichteten anorganischen Verbindung,
das wasserdispergierbare Harzbindemittel 2 in der Wasserdampfsperrschicht umfasst mindestens eines ausgewählt aus der Gruppe bestehend aus einem Styrol/Butadien-Copolymer, einem Styrol/ungesättigten Carbonsäure-Copolymer und einem Olefin/ungesättigten Carbonsäure-Copolymer,
der Gehalt des wasserdispergierbaren Harzbindemittels 2 beträgt 50 Massen-% oder mehr des gesamten Feststoffgehaltes in der Wasserdampfsperrschicht,
das wasserdispergierbare Harzbindemittel 1 und das wasserdispergierbare Harzbindemittel 2 sind nicht identisch,
die geschichtete anorganische Verbindung weist ein Aspektverhältnis von 50 oder mehr auf,
die geschichtete anorganische Verbindung weist eine Dicke von 50 nm oder weniger auf, und
der Gehalt der geschichteten anorganischen Verbindung in der Wasserdampfsperrschicht beträgt 0,1 Massenteile oder mehr und 100 Massenteile oder weniger, bezogen auf 100 Massenteile des wasserdispergierbaren Harzbindemittels 2,
wobei die Beschichtungsmenge der Gassperrschicht bezogen auf den Feststoffgehalt 0,1 g/m² oder mehr beträgt, und
wobei die Beschichtungsmenge der Wasserdampfsperrschicht bezogen auf den Feststoffgehalt 1 g/m² oder mehr beträgt.

2. Das Sperrschichtlaminat gemäß Anspruch 1, wobei die Oberflächenladung des kationischen Harzes 0,1 meq/g oder mehr und 10 meq/g oder weniger beträgt.

3. Das Sperrschichtlaminat gemäß Anspruch 1 oder 2, wobei die Gassperrschicht außerdem eine geschichtete anorganische Verbindung umfasst.

4. Das Sperrschichtlaminat gemäß Anspruch 3, wobei die in der Gassperrschicht enthaltene anorganische Schichtverbindung mindestens eine ist ausgewählt aus der Gruppe bestehend aus Glimmer und Kaolin.

5. Das Sperrschichtlaminat gemäß einem der Ansprüche 1 bis 4, wobei der Gehalt des kationischen Harzes in der Wasserdampfsperrschicht 1 Massenteil oder mehr und 50 Massenteile oder weniger bezogen auf 100 Massenteile des wasserdispergierbaren Harzbindemittels 2 beträgt.

6. Das Sperrschichtlaminat gemäß einem der Ansprüche 1 bis 5, das außerdem eine Siegelschicht auf mindestens einer äußersten Schicht umfasst.

7. Das Sperrschichtlaminat gemäß Anspruch 6, wobei die Siegelschicht ein biologisch abbaubares Harz umfasst.

8. Das Sperrschichtlaminat gemäß einem der Ansprüche 1 bis 7, das für ein Verpackungsmaterial bestimmt ist.

## Revendications

1. Stratifié barrière comprenant un substrat en papier et, sur au moins une surface du substrat en papier, une couche barrière contre les gaz et une couche barrière contre la vapeur d'eau dans cet ordre, dans lequel :
la couche barrière contre les gaz comprend au moins un élément choisi dans le groupe constitué d'un liant de résine soluble dans l'eau et d'un liant de résine hydrodispersable 1, dans lequel
le liant de résine soluble dans l'eau comprend au moins un produit choisi dans le groupe constitué d'un alcool polyvinylique et d'un alcool polyvinylique modifié,
lorsque la couche barrière contre les gaz comprend le liant de résine soluble dans l'eau, la teneur en liant de résine soluble dans l'eau dans la couche barrière contre les gaz est de 50 % en masse ou plus dans la teneur en solides de la couche barrière contre les gaz,
le liant de résine hydrodispersable 1 de la couche barrière contre les gaz comprend au moins une résine choisie dans le groupe constitué d'une résine d'uréthane et d'une résine de chlorure de vinylidène,
lorsque la couche barrière contre les gaz comprend le liant de résine hydrodispersable 1, la teneur du liant de résine hydrodispersable 1 dans la couche barrière contre les gaz est de 50 % en masse ou plus dans la teneur en solides de la couche barrière contre les gaz,
la couche barrière contre la vapeur d'eau comprend un composé inorganique stratifié, une résine cationique et un liant de résine hydrodispersable 2,
dans lequel
le composé inorganique en couche compris dans la couche barrière contre la vapeur d'eau comprend au moins un composé choisi dans le groupe constitué par le mica et la bentonite,
la résine cationique comprend au moins un élément choisi parmi le groupe constitué d'une résine polyamine, une résine polyamide modifiée par des cations, une résine polyamide-épichlorhydrine, une résine polyéthylèneimine, une résine polyalkylène polyamine, un composé polyamide, un produit de condensation polyamideamine-épihalohydrine ou formaldéhyde, un produit de condensation polyamine-épihalohydrine ou formaldéhyde, un produit de condensation polyamide polyurée-épihalohydrine ou formaldéhyde, un produit de condensation polyamine polyurée-épihalohydrine ou formaldéhyde, un produit de condensation de polyamideamine polyurée-épihalohydrine ou de formaldéhyde, un composé de polyamide polyurée, un composé de polyamine polyurée, un composé de polyamideamine polyurée, un composé de polyamideamine, une polyvinylpyridine, un composé d'acrylamide modifié par amino, une résine de polyvinylamine, et un chlorure de polydiallyldiméthylammonium,
la teneur en résine cationique dans la couche barrière contre la vapeur d'eau est de 1 partie en masse ou plus et de 300 parties en masse ou moins par rapport à 100 parties en masse du composé inorganique stratifié,
le liant de résine hydrodispersable 2 dans la couche barrière contre la vapeur d'eau comprend au moins un produit choisi dans le groupe constitué d'un copolymère styrène/butadiène, d'un copolymère styrène/acide carboxylique insaturé et d'un copolymère oléfine/acide carboxylique insaturé,
la teneur en liant de résine hydrodispersable 2 est égale ou supérieure à 50 % en masse dans toute la teneur en solides dans la couche barrière contre la vapeur d'eau,
le liant de résine hydrodispersable 1 et le liant de résine hydrodispersable 2 ne sont pas les mêmes,
le composé inorganique stratifié a un rapport d'aspect de 50 ou plus,
le composé inorganique en couche a une épaisseur de 50 nm ou moins, et
la teneur en composé inorganique stratifié dans la couche barrière contre la vapeur d'eau est de 0,1 partie en masse ou plus et de 100 parties en masse ou moins par rapport à 100 parties en masse du liant de résine hydrodispersable 2,
dans lequel la quantité de revêtement de la couche barrière contre les gaz est, en tant que teneur en solides, de 0,1 g/m² ou plus, et
dans lequel la quantité de revêtement de la couche barrière contre la vapeur d'eau est de 1 g/m² ou plus en tant que teneur en solides dans celle-ci.

2. Stratifié barrière selon la revendication 1, dans lequel la charge de surface de la résine cationique est supérieure ou égale à 0,1 meq/g et inférieure ou égale à 10 meq/g.

3. Stratifié barrière selon la revendication 1 ou 2, dans lequel la couche barrière contre les gaz comprend en outre un composé inorganique stratifié.

4. Stratifié barrière selon la revendication 3, dans lequel le composé inorganique en couche compris dans la couche barrière contre les gaz est au moins un composé choisi dans le groupe constitué du mica et du kaolin.

5. Stratifié barrière selon l'une quelconque des revendications 1 à 4, dans lequel la teneur en résine cationique dans la couche barrière contre la vapeur d'eau est supérieure ou égale à 1 partie en masse et inférieure ou égale à 50 parties en masse par rapport à 100 parties en masse du liant de résine hydrodispersable 2.

6. Stratifié barrière selon l'une quelconque des revendications 1 à 5, comprenant en outre une couche d'étanchéité sur au moins une couche la plus externe.

7. Stratifié barrière selon la revendication 6, dans lequel la couche d'étanchéité comprend une résine biodégradable.

8. Stratifié barrière selon l'une quelconque des revendications 1 à 7, qui est destiné à un matériau d'emballage.
